# EUROPEAN PATENT SPECIFICATION

(11) **EP 4 367 477 B1**
(45) Date of publication and mention of the grant of the patent: **10.12.2025**
(21) Application number: 21742114.8
(22) Date of filing: 08.07.2021
(51) Int. Cl.: G01C 21/20, G06T 7/73, G01C 21/00

(54) **SUPPORTING LOCALIZATION AND MAPPING USING A HETEROGENEOUS MAP**
UNTERSTÜTZUNG VON LOKALISIERUNG UND KARTIERUNG UNTER VERWENDUNG EINER HETEROGENEN KARTE
PRISE EN CHARGE DE LOCALISATION ET DE CARTOGRAPHIE À L'AIDE D'UNE CARTE HÉTÉROGÈNE

(43) Date of publication of application: 15.05.2024
(73) Proprietor: Telefonaktiebolaget LM Ericsson (publ), 164 83 Stockholm (SE)
(72) Inventor: ARAÚJO, José, 117 31 Stockholm (SE); MUDDUKRISHNA, Ananya, 121 31 Enskededalen (SE); CUBERO, Paula, 174 51 Sundbyberg (SE)
(74) Representative: Ericsson
(86) International application number: PCT/EP2021/069027
(87) International publication number: WO 2023/280410

(56) References cited:
- WO-A1-2020/226187
- US-A1- 2021 356 293
- CUBERO PAULA CARBó: "Toward localization and mapping with heterogeneous depth sensors", 14 September 2020 (2020-09-14), XP055844892, Retrieved from the Internet <URL:https://www.diva-portal.org/smash/get/diva2:1503670/FULLTEXT01.pdf> [retrieved on 20210927]

## Description

### Technical field

The invention relates to a mapping device for supporting localization and mapping using a heterogenous map comprising image-based map elements and structure-based map elements, a method of supporting localization and mapping using a heterogenous map comprising image-based map elements and structure-based map elements, a corresponding computer program, a corresponding computer-readable data carrier, and a corresponding data carrier signal.

### Background

Simultaneous Localization and Mapping (SLAM) and similar algorithms may be used for determining the pose, i.e., position and/or orientation, of a device moving through a real-world environment using a map, while at the same time augmenting the map with new information. This is achieved by utilizing information captured by one or more sensors which the device is carrying, comparing the captured information with the existing map to determine the device's pose, while at the same time the map with information derived from the captured sensor data.

An important research topic is performing SLAM with heterogeneous sensor information, i.e., localizing a device having a certain type of sensor, e.g., image-based or structure-based, using a heterogenous map which contains both image-based and structure-based elements. This is because devices may be equipped with a wide range of sensors of the same type or different types, having different capabilities. For example, an ordinary smartphone executing an Augmented Reality (AR) application may have only a monocular camera, whereas high-end smartphones or tablets may be equipped with a monocular camera and a Lidar (e.g., the Apple iPhone 12 Pro and the Apple iPad Pro). Moreover, Mixed-Reality (MR) headsets will likely be provided with multiple monocular cameras, and in some cases stereo cameras or Lidars, robotic vacuum cleaners may only possess a Lidar, while industrial robots may feature all the above sensors. Even if a device may have multiple sensors of the same type, their characteristics may vary, e.g., with respect to the Field-of-View (FoV), range, resolution, density, frame rate, etc. Hence, there is a strong need to develop SLAM algorithms and solutions which can handle such heterogeneity.

When performing localization on heterogeneous maps which have been compiled using sensor data from potentially different devices at different occasions, a problem that arises is to decide which map information should be used to localize a device which has a specific type of sensor.

WO 2020/226187 A1 discloses a robot generating a map based on multi sensors and artificial intelligence and moving based on the map, the robot according to an embodiment including a controller generating a pose graph that includes a LiDAR branch including one or more LiDAR frames, a visual branch including one or more visual frames, and a backbone including two or more frame nodes registered with any one or more of the LiDAR frames or the visual frames, and generating odometry information that is generated while the robot is moving between the frame nodes.

### Summary

It is an object of the invention to provide an improved alternative to the above techniques and prior art.

More specifically, it is an object of the invention to provide improved solutions for supporting localization and mapping of devices using heterogenous maps.

These and other objects of the invention are achieved by means of different aspects of the invention, as defined by the independent claims. Embodiments of the invention are characterized by the dependent claims.

According to a first aspect of the invention, a mapping device for supporting localization and mapping using a heterogenous map is provided. The heterogenous map comprises image-based map elements and structure-based map elements. The mapping device is operative to receive a request pertaining to localization using current sensor data which is image-based sensor data or structure-based sensor data. The mapping device is further operative to access image-based map elements and structure-based map elements, representing visual features and structural features, respectively, in a real-world environment. Each map element is associated with a capturing time indicating a time of capturing the sensor data based on which it was derived. The mapping device is further operative to identify pairs of corresponding map elements. Each pair of corresponding map elements comprises an image-based map element of the accessed image-based elements, and a structure-based map element of the accessed structure-based map elements. The image-based map element and the structure-based map element, i.e., the corresponding map elements, represent features at the same real-world location. The mapping device is further operative to determine, for each pair of corresponding map elements, an information difference metric between the image-based map element and the structure-based map element. The information difference metric is indicative of a difference in a representation of the real-world location by the image-based map element and a representation of the real-world location by the structured-based map element. The mapping device is further operative to select, for each pair of corresponding map elements, one of the map elements of the pair of corresponding map elements for updating the heterogenous map. The selection is based on a comparison of the respective capturing times, a type of the current sensor data, and the information difference metric.

According to a second aspect of the invention, a method of supporting localization and mapping using a heterogenous map is provided. The heterogenous map comprises image-based map elements and structure-based map elements. The method is performed by a mapping device and comprises receiving a request pertaining to localization using current sensor data which is image-based sensor data or structure-based sensor data. The method further comprises accessing image-based map elements and structure-based map elements, representing visual features and structural features, respectively, in a real-world environment. Each map element is associated with a capturing time indicating a time of capturing the sensor data based on which it was derived. The method further comprises identifying pairs of corresponding map elements. Each pair of corresponding map elements comprises an image-based map element of the accessed image-based elements, and a structure-based map element of the accessed structure-based map elements. The image-based map element and the structure-based map element, i.e., the corresponding map elements, represent features at the same real-world location. The method further comprises determining, for each pair of corresponding map elements, an information difference metric between the image-based map element and the structure-based map element. The information difference metric is indicative of a difference in a representation of the real-world location by the image-based map element and a representation of the real-world location by the structured-based map element. The method further comprises selecting, for each pair of corresponding map elements, one of the map elements of the pair of corresponding map elements for updating the heterogenous map. The selection is based on a comparison of the respective capturing times, a type of the current sensor data, and the information difference metric.

According to a third aspect of the invention, a computer program is provided. The computer program comprises instructions which, when the computer program is executed by a computing device, such as a mapping device, cause the computing device to carry out the method according to an embodiment of the second aspect of the invention.

According to a fourth aspect of the invention, a computer-readable data carrier is provided. The computer-readable data carrier has stored thereon the computer program according to the third aspect of the invention.

According to a fifth aspect of the invention, a data carrier signal is provided. The data carrier signal carries the computer program according to the third aspect of the invention.

The invention makes use of an understanding that, in heterogenous SLAM, the problem arises that a device (commonly referred to as "agent" in SLAM literature) comprising one or more sensors of potentially different types, which uses a heterogenous map for localizing itself, i.e., determining its pose (position and/or orientation) in a real-world environment represented by the heterogenous map, has no means of assessing which of potentially several map elements of different types representing the same real-world location is the current or more recent representation of the real-world environment at that location. Such a scenario may arise if the real-world environment has changed in-between capturing of data by sensor devices having different types of sensors. If that occurs, the derived map elements having different types may have deviating representations of visual or structural features of the same real-world location.

Embodiments of the invention are advantageous in that the selection of map elements among map elements in a heterogenous map, i.e., map elements having different types, is not only based on type, e.g., a device comprising an image-based sensor is localized based on image-based map elements, but also takes into consideration the difference in representations of the real-world environment by the respective different-type map elements, as well as the time when their respective representations were valid, i.e., when the sensor data from which the map elements are derived has been captured.

Even though advantages of the invention have in some cases been described with reference to embodiments of the first aspect of the invention, corresponding reasoning applies to embodiments of the other aspects of the invention.

Further objectives of, features of, and advantages with, the invention will become apparent when studying the following detailed disclosure, the drawings, and the appended claims. Those skilled in the art realize that different features of the invention can be combined to create embodiments other than those described in the following.

### Brief description of the drawings

The above, as well as additional objects, features, and advantages of the invention, will be better understood through the following illustrative and non-limiting detailed description of embodiments of the invention, with reference to the appended drawings, in which:
Fig. 1 illustrates a scenario in which embodiments of the invention may be employed.
Fig. 2 illustrates embodiments of the mapping device for supporting localization and mapping using a heterogenous map.
Fig. 3 shows a sequence diagram illustrating localization and mapping using a heterogenous map, in accordance with embodiments of the invention.
Fig. 4 shows a flow chart illustrating embodiments of the method of supporting localization and mapping using a heterogenous map.

All the figures are schematic, not necessarily to scale, and generally only show parts which are necessary in order to elucidate the invention, wherein other parts may be omitted or merely suggested.

### Detailed description

The invention will now be described more fully herein after with reference to the accompanying drawings, in which certain embodiments of the invention are shown. This invention may, however, be embodied in many different forms and should not be construed as limited to the embodiments set forth herein. Rather, these embodiments are provided by way of example so that this disclosure will be thorough and complete, and will fully convey the scope of the invention to those skilled in the art.

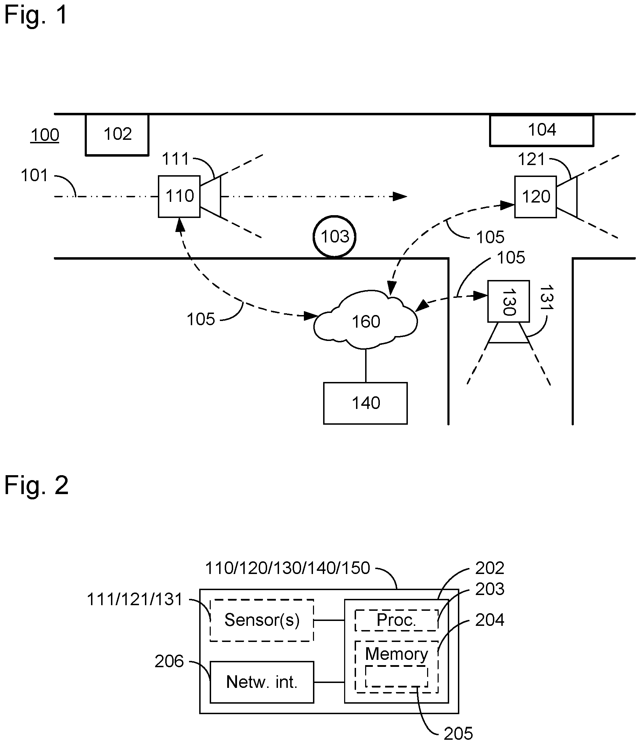

In the following, embodiments of the invention will be described in relation to the scenario illustrated in Fig. 1, which shows a sensor device 110 moving through a real-world environment 100, such as a corridor in an office building or a factory floor, along a route 101, carrying one or more sensors 111. The task at hand is to localize the sensor device 110, i.e., to determine its pose (position and/or orientation) in the real-world environment 100 using a Simultaneous Localization and Mapping (SLAM) algorithm relying on a heterogonous map, i.e., a map comprising both image-based map elements and structure-based map elements. While embodiments of the invention are described in relation to SLAM, which is a class of algorithms solving the computational problem of constructing or updating a map of an environment while simultaneously keeping track of an agent's (such as the sensor device 110) location within it, embodiments of the invention are not limited to SLAM but may rely on any localization-and-mapping algorithm other than SLAM.

It is assumed here that the sensor device 110 is to be localized using an existing heterogeneous map which is updated while the sensor device 110 moves through the real-world environment 100, which in Fig. 1 is illustrated to include real-world objects 102-104 (e.g., shelfs, tables, boxes, water coolers, etc). The existing heterogenous map comprises images-based map elements and structure-based map elements which have been derived from sensor data captured by image-based sensors and structure-based sensors, respectively, at earlier points in time. The sensor data from which the image-based map elements and the structure-based map elements are derived may have been captured by the sensor device 110 when moving through the environment 100 at an earlier occasion, using the sensor(s) 111. Alternatively or additionally, the sensor data may have been captured by one or more additional sensor devices 120 and 130, which are similar to the sensor device 110 and comprise sensors 121 and 131, when moving through the environment 100 at an earlier occasion or earlier occasions. For the sake of simplicity, it is assumed here that the image-based map elements have been derived from sensor data captured by the sensor device 120 comprising an image-based sensor 121, and that the structure-based map elements have been derived from sensor data captured by the sensor device 130 comprising a structure-based sensor 131.

Embodiments of the invention relate to a field known as collaborative mapping, which is based on multiple sensor devices capturing sensor data of the same real-world environment at different occasions, using sensors having different capabilities (e.g., resolution, accuracy, Field-of-View, etc) and potentially different types (image-based vs structure-based). Throughout this disclosure, a sensor, such as sensors 111, 121, or 131, is assumed to be either of image-based type or of structure-based type. Examples of image-based sensors are monocular cameras, stereo cameras, and any other optical sensor which captures a visual image of the environment 100. Examples of structure-based sensors are Lidars, stereo cameras, radars, and any other sensor which captures ranges or distances between the sensor and the environment 100.

In practice, collaborative mapping may be implemented in different ways, utilizing the distributed nature of the underlying architecture with different sensor devices (such as the sensor devices 110, 120, and 130) and a mapping server 140. The mapping server 140 may be provided as an application server or edgecloud which is accessible by, and can communicate with, the sensor devices 110, 120, and 130, via communication links 105 which are established between the sensor devices 110, 120, and 130, and one or more communications networks 160 which may include one or more radio-access-networks , such as cellular networks, WLAN/Wi-Fi networks, a Bluetooth network, or the like. The sensor devices 110, 120, and 130, may also exchange data with each other via the communication links 105, either directly in a device-to-device fashion or via the one or more communications networks 160.

For instance, a sensor device, such as sensor device 110, capturing sensor data utilizing its sensor 111 while moving through the environment 100, may transmit the captured sensor data to the mapping server 140, which creates map elements based on the captured sensor data and updates an existing heterogenous map with the created map elements with an existing heterogenous map, which already contains map elements derived from sensor data captured by sensor devices (such as sensors devices 110, 120, and 130) at earlier occasions. The process updating an existing map by adding, or fusing, new map elements which are created based on captured sensor data is commonly referred to as "mapping". Then, the mapping device 140 sends the updated heterogenous map, or a portion of the updated heterogenous map covering an area of the environment 100 in which the sensor device 110 is to be localized, to the sensor device 110. Upon receiving the updated heterogenous map, or portion thereof, the sensor device 110 attempts to determine its pose, i.e., its position and/or orientation, using the updated heterogenous map, as is known in the art. The latter process is commonly referred to as a "localization". A portion of a larger map which covers an area of an environment in which a sensor device (or agent) is to be localized is commonly referred to as "local map".

In an alternative implementation of distributed SLAM, the sensor device 110 capturing sensor data with its sensor 111 while moving through the environment 100 may perform both localization and mapping, using a locally stored heterogenous map. This may, e.g., be a heterogenous map, or portion thereof covering an area of the environment 100 in which the sensor device 110 is to be localized, which the sensor device 110 has received from the mapping server 140. Similar to what is described hereinabove in relation to performing mapping by the mapping device 140, the sensor device 110 creates map elements based on the captured sensor data and fuses the created map elements with the existing local heterogenous map. It may then transmit the updated local map to the mapping device 140, which fuses the received updated map with its heterogeneous map. The map which is maintained by the mapping device 140 is commonly referred to as a "global map". The mapping device 140 may optionally share the updated global map, or updated local maps, with the sensor devices 110, 120, and 130. In this way, sensor devices moving close to each other in the same environment benefit from each other's captured sensor data.

For both implementations, the sensor device 110 performs localization using a local map, which optionally may only cover a limited geographical area, whereas the mapping device 140 collects updated local maps or map elements from different sensor devices, such as sensor devices 110, 120, and 130, and fuses the updated information with its existing heterogenous map.

As yet a further alternative, collaborative mapping may also be implemented in a distributed fashion without relying on a mapping device 140 for maintaining a (global) map, as is described hereinbefore. In this alternative implementation, the sensor devices, such as sensor devices 110, 120, and 130, perform localization and mapping locally and share their updated local maps with each other, and each sensor device 110, 120, and 130, fuses the received updated map or map elements with its local heterogeneous map. In other words, the sensor devices 110, 120, and 130, perform localization and mapping autonomously and share updated map information with each other, via the communication links 105.

For the sake of simplicity, the present disclosure focuses on the first alternative described above, i.e., the sensor device 110 transmits captured sensor data to the mapping server 140, which creates map elements based on the captured sensor data and fuses the created map elements with an existing heterogenous map, which it then shares with the sensor device 110, and based on which the sensor device performs localization. However, embodiments of the invention are not limited to this specific implementation of distributed SLAM, and alternative embodiments may easily be envisaged. In particular, the mapping device 140 may comprise the sensor device 110, i.e., the sensor device 110 is performing both localization and mapping.

In Fig. 2, embodiments of the mapping device 140 are illustrated. The mapping device 140 comprises processing circuitry 202 causing the mapping device 140 to be operative to perform in accordance with embodiments of the invention described herein, and a network interface 206.

The processing circuitry 202 may comprise one or more processors 203, such as Central Processing Units (CPUs), microprocessors, application-specific processors, Graphics Processing Units (GPUs), and Digital Signal Processors (DSPs) including image processors, or a combination thereof, and a memory 204 comprising a computer program 205 comprising instructions. When executed by the processor(s) 203, the computer program 205 causes the mapping device 140 to become operative in accordance with embodiments of the invention described herein. The memory 204 may, e.g., be a Random-Access Memory (RAM), a Read-Only Memory (ROM), a Flash memory, or the like. The computer program 205 may be downloaded to the memory 204 by means of the network interface 206, as a data carrier signal carrying the computer program 205. The processing circuitry 202 may alternatively or additionally comprise one or more Application-Specific Integrated Circuits (ASICs), Field-Programmable Gate Arrays (FPGAs), or the like, which are operative to cause the mapping device 140 to become operative in accordance with embodiments of the invention described herein.

The network interface 206 may comprise one or more of a cellular modem (e.g., GSM, UMTS, LTE, 5G, or higher generation), a WLAN/Wi-Fi modem, a Bluetooth modem, a Near-Field Communication (NFC) modem, an Ethernet interface, or the like, for exchanging data through a communication link 105 with one or more sensor devices, such as sensor devices 110, 120, and 130. Data may be exchanged directly, or via one or more wired or wireless communications networks 160.

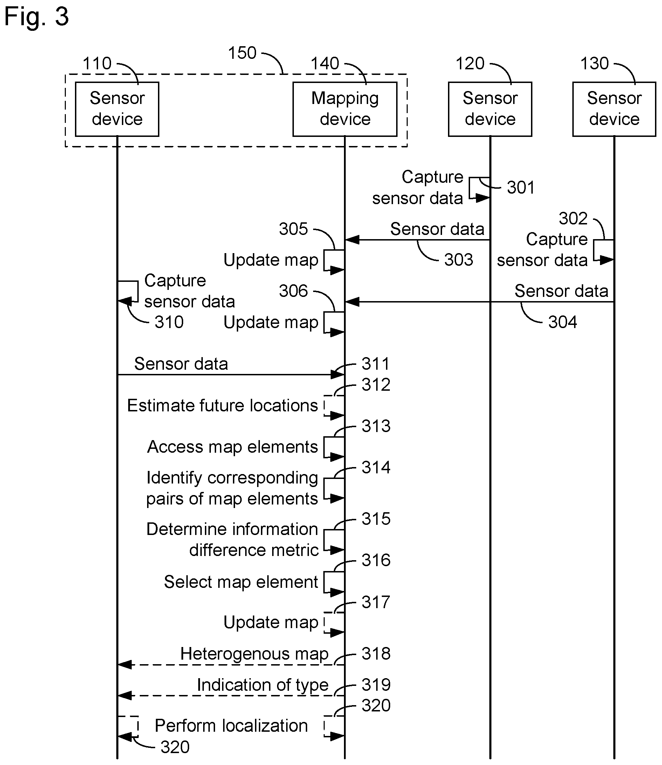

Further with reference to Fig. 2, for the alternative implementations of distributed SLAM described above, in particular implementations which rely on the sensor devices 110, 120, and 130, to perform both localization and mapping, embodiments of the sensor devices 110, 120, and 130, are similar to what is described hereinbefore in relation to embodiments of the mapping device 140. In addition to the processing circuitry 202 and the network interface 206, the sensor devices 110, 120, and 130, comprise one or more sensors 111, 121, and 131, respectively. Each sensor may either be an image-based sensor, such as aa monocular cameras, a stereo camera, or any other optical sensor which captures a visual image of the environment 100, or a structure-based sensor, such as a Lidar, a stereo camera, a radar, or any other sensor which captures ranges or distances between the sensor and the environment 100. In this case, the mapping device 140 comprises the sensor device, such as sensor device 110, as is illustrated in Fig. 3 (reference numeral 150). Embodiments of the mapping device 140 comprising the sensor device 110 include, e.g., mobile phones, smartphones, eXtended-Reality (XR) headsets, robots, vehicles, drones, Unmanned Autonomous Vehicles (UAVs), or the like.

In the present context, maps and map elements are data structures comprising data representing features of a real-world environment. A known alternative used for both image-based maps and structure-based maps in relation to SLAM are so-called graph maps. These are graph structures which are defined by vertices and edges. The vertices contain the map information, which for structure-based maps may include depth information, or pointcloud/segment descriptors and their respective poses. For image-based maps, the vertices may include keyframes, or 2D features or images and their respective poses. The edges describe the geometric transformation required to traverse from one vertex to adjacent vertices. A widely used framework for graph maps and their manipulation is g2o (https://openslam-org.github.io/g2o.html, R. Kümmerle, G. Grisetti, H. Strasdat, K. Konolige, and W. Burgard, "g2o: A General Framework for Graph Optimization", IEEE International Conference on Robotics and Automation (ICRA), 2011).

A known alternative for both image-based maps and structure-based maps in relation to SLAM are so-called occupancy maps. An occupancy map is an 2D or 3D array of cells, octree, or any other 3D space representation format, which can either be occupied or free, depending on if a real-world object was present when the underlying sensor data was captured. A widely used framework for occupancy maps is OctoMap (https://octomap.github.io/, A. Hornung, K. M. Wurm, M. Bennewitz, C. Stachniss, and W. Burgard, "OctoMap: an efficient probabilistic 3D mapping framework based on octrees", Autonomous Robots, vol. 34, pages 189-206, Springer, 2013).

Occupancy maps can be represented as graph maps, so that both types represent the same information. For example, a graph map can encode parts of an occupancy grid map, where instead of the vertex being a point cloud, an image, or descriptors of those, it is a section or an element of an occupancy grid map (see, e.g., "Virtual Occupancy Grid Map for Submap-based Pose Graph SLAM and Planning in 3D Environments", by B.-J. Ho, P. Sodhi, P. Teixeira, M. Hsiao, T. Kusnur, and M. Kaess, 2018 IEEE/RSJ International Conference on Intelligent Robots and Systems (IROS), IEEE, 2019).

Throughout this disclosure, a map element is to be understood as a subset of a map. For instance, for graph maps, a map element may comprise one or more vertices including its/their edges. For occupancy maps, a map element may comprise one or more cells. In practice, the number of vertices and edges, or the number of cells, i.e., the size of the map element, is a design parameter and may be selected according to the desired resolution of the map. For example, for a graph map, a new vertex is created for every "keyframe" which is a reference frame for the current space (instead of every frame), while for an occupancy map the desired depth of the tree-based space representation is selected, which in turn defines the desired map resolution in meters, and can be adjusted to reflect the resolution of the sensor capturing the data.

In the following, embodiments of the mapping device 140 for supporting localization and mapping using a heterogenous map are described with reference to Fig. 3, which shows a sequence diagram illustrating localization and mapping using a heterogenous map.

The mapping device 140 is operative to receive a request 311 pertaining to localization using current sensor data. The current sensor date is either image-based sensor data or structure-based sensor data. In general, the received request 311 may relate to localization of a sensor device comprising at least one sensor operative to capture the current sensor data, such as the sensor device 110. The request 311 may be received from the sensor device 110, and may comprise the current sensor data. In practice, the current sensor data is sensor data which the sensor device 110 has captured 310 using its sensor 111.

The mapping device 140 is further operative to access 313 image-based map elements and structure-based map elements. The image-based map elements represent visual features in a real-world environment, in particular the environment 100. In practice, the image-based map elements may be derived from sensor data captured 301 by one or more image-based sensors, e.g., the sensors 121 comprised in the sensor device 120 which has passed through the environment 100 at an earlier occasion, as part of mapping process performed by the mapping device 140 during which the heterogenous map maintained by the mapping device 140 is updated 305. The image-based map elements are associated with respective capturing times indicating a time of capturing 301 the sensor data based on which they have been derived. The capturing time may, e.g., be indicated by a time stamp which is associated with the map element, e.g., as meta data.

The structure-based map elements represent structural features in a real-world environment, in particular the environment 100. In practice, the structure-based map elements may be derived from sensor data captured 302 by one or more structure-based sensors, e.g., the sensors 131 comprised in the sensor device 130 which has passed through the environment 100 at an earlier occasion, as part of a mapping process performed by the mapping device 140 during which the heterogenous map maintained by the mapping device 140 is updated 306. The structure-based map elements are associated with respective capturing times indicating a time of capturing 302 the sensor data based on which they have been derived.

The image-based map elements and the structure-based map elements may be part of a heterogenous map, e.g., a global map, which the mapping device 140 maintains and updates in a collaborative manner. The image-based map elements and the structure-based map elements, or the heterogenous map, may be stored in a local data storage which the mapping device is provided with, such as the memory 204, or in a data storage which is accessible by the mapping device 140 via the one or more communications networks 160, e.g., a cloud storage.

The mapping device 140 is further operative to identify 314 pairs of corresponding map elements. Each pair of corresponding map elements comprises an image-based map element of the accessed image-based elements, and a structure-based map element of the accessed structure-based map elements. The image-based map element and the structure-based map element of the pair of corresponding map elements represent features at the same, or at least substantially the same, real-world location. In other words, the two corresponding map elements represent respective regions in the real-world environment which substantially overlap, and preferably are identical. By way of reminder, the real-world region is represented by a map element which comprises one or more cells. It is assumed here that the set of image-based map elements and the set of structure-based mal elements are aligned, i.e., they use a common coordinate system which allows to identify pairs of corresponding map elements which represent visual and structural features, respectively, at the same, or substantially the same, real-world location.

The mapping device 140 is further operative, for each pair of corresponding map elements, to determine 315 an information difference metric between the image-based map element and the structure-based map element of the pair of corresponding map elements. The information difference metric is indicative of a difference in a representation of the real-world location by the image-based map element and a representation of the (same, or substantially the same) real-world location by the structured-based map element.

For occupancy maps, or map elements of occupancy-type, the information difference metric may be calculated based on a comparison of the respective states, i.e., whether the corresponding cell, or cells, of the corresponding image-based map element and the structure-based map element are occupied or not occupied. If the map elements comprise single cells, the information difference metric is binary, i.e., the states of the corresponding map elements are the same (e.g., the information difference metric is 0 or 0%), or not (accordingly, the information difference metric is 1 or 100%). If the map elements comprise multiple cells representing a real-world location, the information difference metric may, e.g., be determined as a ratio (e.g., between 0 and 1, or 0 and 100%) of the corresponding cells which have different states, divided by the total number of pairs of corresponding cells comprised in a map element.

If an octree representation is used, a real-world region is represented by a tree structure comprising cells, where the resolution increases when moving further down the tree structure. In this case, the information difference metric may be determined for different resolutions by limiting the depth of the octree in calculating the information difference metric.

For both occupancy maps and graph maps, or map elements of occupancy-type or graph-type, the information difference metric may be determined based on feature descriptors. A feature descriptor is generated by an algorithm which takes as input 3D data which is a structural representation of the real-world environment, and outputs feature descriptors, aka feature vectors. Feature descriptors encode information into a series of numbers and act as a sort of numerical "fingerprint" that can be used to differentiate one feature from another. As an example, R. Dubé, A. Cramariuc, D. Dugas, H. Sommer, M. Dymczyk, J. Nieto, R. Siegwart, and C. Cadena, have described an algorithm for generating feature descriptors as 64x1 vectors of floating point numbers in "SegMap: Segment-based mapping and localization using data-driven descriptors" (in "The International Journal of Robotics Research", DOI: 10.1177/0278364919863090, 2019). The information difference metric may then be calculated as the distance in feature space between two feature descriptors at the same real-world location. The distance in feature space can, e.g., be computed as the Euclidian distance between the two 64x1 vectors of floating-point numbers. A distance of zero means that the two feature descriptors are exactly the same, i.e., there is no information difference between the corresponding image-based structure-based map elements (e.g., the information difference metric is 0 or 0%). A non-zero distance is indicative of a difference in information. Because of noise, which is inherent to captured sensor data, the sensor's limited accuracy etc, a non-zero threshold is used for determining whether two map elements represent the same information, or not, as is described below.

The mapping device 140 is further operative to select 316, for each pair of corresponding map elements, one of the map elements of the pair of corresponding map elements for updating the heterogenous map. The map element is selected based on a comparison of the respective capturing times, a type of the current sensor data, and the information difference metric, as is described in further detail below.

Optionally, the mapping device 140 may further be operative to update 317, for each pair of corresponding map elements, the heterogenous map with the selected 316 map element, or a transformed map element which is derived therefrom. Depending on the type of the selected map element, i.e., image-based or structure-based, they selected map element may need to be transformed into a map element of the other type, as is described in further detail below. Updating 317 the heterogenous map may be achieved by adding a new map element, or replacing an existing map element at the same location as the selected map element with the selected map element, or a transformed map element which is derived therefrom. The process of updating maps with new sensor information, or map elements derived therefrom, is also referred to as fusing. For a graph map, new vertices and consequently new edges may be added when adding new map elements to an existing map, while the replacement of map elements by a new map element may incur the removal of vertices and/or edges. Similarly, for occupancy maps, map elements in the form of an octree can be updated with new information, or removed if environmental information is no longer present at a given location represented by the map element.

As an alternative, the mapping device 140 may be operative to perform localization 320 on the selected 316 map element, or a set of selected 316 map elements which are in proximity of the sensor device 110, without updating 317 the heterogenous map for future use. In particular, this may be the case if the mapping device 150 comprises the sensor device 110.

Maps, or map elements, of a given type may be transformed into maps or map elements, respectively, of the other type. Correspondingly, sensor data of a given type may be transformed into sensor data of the other type. For instance, "Visual localization within LIDAR maps for automated urban driving", by R. W. Wolcott and R. M. Eustice, in "2014 IEEE/RSJ International Conference on Intelligent Robots and Systems", DOI: 10.1109/IROS.2014.6942558, IEEE, 2014, discloses transforming structure-based map elements or sensor data into image-based map elements or sensor data, respectively. More specifically, 3D Lidar data extracted by a sensor and stored in a map is transformed into synthetic 2D images by applying a projection framework.

The transformation of image-based map elements or sensor data into structure-based map elements or sensor data, may, e.g., be performed in accordance with what is described in "Monocular camera localization in 3D LiDAR maps" (by T. Caselitz, B. Steder, M. Ruhnke, and W. Burgard, in "2016 IEEE/RSJ International Conference on Intelligent Robots and Systems (IROS)", DOI: 10.1109/IROS.2016.7759304, IEEE, 2016) which describes creating a 3D point-cloud comprising 2D features extracted from 2D images by computing the 3D location of the 2D features using a SLAM algorithm. Yet another method to transform image-based map elements or sensor data into structure-based map elements or sensor data is based on unsupervised or supervised Machine Learning techniques, as proposed in "Unsupervised monocular depth estimation with left-right consistency", by C. Godard, O. Mac Aodha, and G. J. Brostow (in "2017 IEEE Conference on Computer Vision and Pattern Recognition (CVPR)", pages 6602-6611, DOI: 10.1109/CVPR.2017.699, IEEE, 2017).

The mapping device 140 may optionally be further operative to estimate 312 future real-world locations of a sensor device which is operative to capture the current sensor data, such as the sensor device 110. In practice, these are real-world locations at which the current sensor data is likely to be captured, i.e., locations which the sensor device 110 will visit in the near future. The future real-world locations of the sensor device 110 may be estimated 312 based on one or more of:
- A current position of the sensor device 110: this may, e.g., be a known current position from a preceding localization-and-mapping process, from a GPS or other type of geolocation sensor, or from an in-house positioning system.
- A current and/or future velocity of the sensor device 110: this may be a measured, estimated, or planned velocity, e.g., obtained from a route-planning algorithm; it may also be based on knowledge about the sensor device's 110 capabilities, like maximum speed, acceleration, etc, and/or limitations or regulations applying to the real-world environment 110, such as speed limits.
- A planned or estimated route or trajectory of the sensor device 110: this may, e.g., be obtained from a route-planning algorithm.
- Geographical limitations in the movement of the sensor device 110: this may include any physical limitations in the real-world environment, such as walls, ceilings, floors, doors, etc, or access-restricted zones (e.g., red zones, air-traffic control in case of drones, etc).
- A processing time which is estimated to lapse between receiving the request 311 pertaining to localization and until updating 317 the heterogenous map is finalized: preferably, the estimated time for transmitting the heterogenous map to the sensor device 110 is also taken into consideration.
If the mapping device 140 is further operative to estimate 312 future real-world locations of the sensor device 110, it is further operative to prioritize performing one or more of the operations described hereinbefore, in particular identifying 314 pairs of corresponding map elements, determining 315 an information difference metric, selecting 316 one of the corresponding map elements, and updating 317 the heterogenous map with the selected map element, for map elements which represent the estimated 312 future real-world locations of the sensor device 110 operative to capture the current sensor data. Preferably, the mapping device 140 may be operative to perform one or more of these operations only for map elements which represent the estimated 312 future real-world locations of the sensor device 110. Advantageously, and in view of the fact that SLAM and similar algorithms are computationally complex, map elements representing real-world locations which the sensor device is likely to visit in the near future are prioritized and can be made available in time for localizing 320 the sensor device 110.

If the sensor device 110 and the mapping device 140 are separate devices, the mapping device140 may optionally be further operative to transmit the updated heterogenous map 318, or a portion thereof (e.g., a local map, or a map comprising map elements which represent the estimated 312 future real-world locations of the sensor device 110) to the sensor device 110.

In the following, different alternatives for selecting 316 one of the map elements of the pair of corresponding map elements for updating the heterogenous map, based on a comparison of the respective capturing times, a type of the current sensor data, and the information difference metric, are described.

For instance, the mapping device 140 may be operative to select 316 one of the map elements of the pair of corresponding map elements for updating the heterogenous map, if the information difference metric exceeds a threshold, as follows. The mapping device 140 may operative to determine the map element of the pair of corresponding map elements which is derived from the more recently captured sensor data, based on comparing the respective capturing times. In practice, this is the map element with the more recent capturing time, as indicated by the time stamp. This is the map element which is the more recent representation of the real-world environment 100. If the map element which is derived from the more recently captured sensor data is of the same type as the current sensor data, the mapping device 140 is operative to select the map element which is derived from the more recently captured sensor data. Else, if the map element which is derived from the more recently captured sensor data is of a different type than the current sensor data (e.g., the more recent map element is of image-based type, and the current sensor data is captured by a structure-based sensor, or vice versa), the mapping device 140 is operative to transform the map element which is derived from the more recently captured sensor data into a transformed map element having the same type as the current sensor data, and to select the transformed map element.

As another example, the mapping device 140 may be operative to select 316 one of the map elements of the pair of corresponding map elements for updating the heterogenous map, if the information difference metric does not exceed the threshold, by updating the heterogenous map with the map element having the same type as the current sensor data.

The threshold which is used in selecting 316 one of the map elements in accordance with the alternatives described above is a parameter which may be determined through experiments so as to provide a desired level of robustness for the determination of the information difference metric between two map elements. The threshold may further be adjusted according to the environment 100, such as indoor vs outdoor, brightness or lighting conditions, etc, as well as the properties of the image-based and structure-based sensors, such as their accuracy, noise level, etc. As an example, in a recent study using SegMap, it was found that a suitable threshold for the distance in feature space was of the order of 15 (section 4.5 in "Toward localization and mapping with heterogeneous depth sensors", by P. Carbó Cubero, Master Thesis, KTH Royal Institute of Technology, Stockholm, 2020).

As a further alternative, the mapping device 140 may be operative to select one of the map elements of the pair of corresponding map elements for updating the heterogenous map further based on a prevalent type of neighboring map elements of the heterogenous map at a location where the map is to be updated. For an occupancy-type heterogenous map, this would be a number of map elements, or cells, around the location where the new map element is to be fused with the heterogenous map. For a graph-type heterogenous map, this may be map elements, or vertices, which are connected by edges with the vertex at the location where the map is to be updated. Thereby, the map elements which are contained in the heterogeneous map are, at least within a region of the map, which is relied on in the localization process, predominantly of the same type. This is advantageous in that switching between SLAM algorithms for performing localization using image-based map elements versus structure-based map elements can be avoided. Typically, switching of SLAM algorithms due to a change in type of map element on which localization is based incurs a computational cost which is caused by initialization of the SLAM algorithm.

More specifically, the mapping device 140 may be operative to select 316 one of the map elements of the pair of corresponding map elements for updating the heterogenous map as follows. The mapping device 140 may be operative to determine the map element of the pair of corresponding map elements which is derived from the more recently captured sensor data, based on comparing the respective capturing times. In practice, this is the map element with the more recent capturing time, as indicated by the time stamp. This is the map element which is the more recent representation of the real-world environment 100. If the prevalent type of neighboring map elements of the heterogenous map is of the same type as the map element which is derived from the more recently captured sensor data, the mapping device 140 is operative to select the map element which is derived from the more recently captured sensor data. Else, if the prevalent type of neighboring map elements of the heterogenous map is of a different type than the map element which is derived from the more recently captured sensor data, the mapping device 140 is operative to transform the map element which is derived from the more recently captured sensor data into a transformed map element having the having the same type as the current sensor data, and to select the transformed map element.

As yet a further alternative, the mapping device may be operative to select 316 one of the map elements of the pair of equivalent map elements for updating the heterogenous map further based on relative computational performance of localization algorithms for different types of map elements. Thereby, by selecting map elements of a type for which the corresponding localization-and-mapping algorithm is more efficient, e.g., faster or less resource consuming, processing time can be reduced, power consumption reduced, or resource requirements lowered.

More specifically, the mapping device 140 may be operative to select 316 one of the map elements of the pair of corresponding map elements for updating the heterogenous map as follows. The mapping device 140 is operative to determine the map element of the pair of corresponding map elements which is derived from the more recently captured sensor data, based on comparing the respective capturing times. In practice, this is the map element with the more recent capturing time, as indicated by the time stamp. This is the map element which is the more recent representation of the real-world environment 100. If the computational performance of a localization algorithm for map elements of the same type as the map element which is derived from the more recently captured sensor data is superior to the computational performance of a localization algorithm for map elements of a different type than the map element which is derived from the more recently captured sensor data, the mapping device 140 is operative to select the map element which is derived from the more recently captured sensor data. Else, if the computational performance of a localization algorithm for map elements of the same type as the map element which is derived from the more recently captured sensor data is not superior to the computational performance of a localization algorithm for map elements of a different type than the map element which is derived from the more recently captured sensor data, the mapping device 140 is operative to transform the map element which is derived from the more recently captured sensor data into a transformed map element having the having the same type as the current sensor data, and to select the transformed map element.

In addition, the mapping device 140 may be operative to select 316 one of the map elements of the pair of corresponding map elements for updating the heterogenous map based on properties of the sensors which have captured the sensor data from which the map elements have been derived. For instance, map elements which have been derived from sensor data captured by sensor with higher accuracy or precision maybe given preference.

Optionally, the mapping device 140 may further be operative, if the received request 311 pertains to localization using current sensor data which is image-based sensor data and structure-based sensor data, e.g., if the sensor device 110 comprises sensors 111 of both types, to indicate which type of current sensor data to use for localization. The indication is provided in response to the request 311 and may be transmitted 319 to the sensor device 110, if the sensor device 110 and the mapping device 140 are separate entities. The indication 319 may be transmitted separately from the updated heterogenous map 318, or together with the updated heterogenous map 318. By providing an indication as to which type of current sensor data to use for localization using the updated heterogenous map 318, localization may be controlled to commence using the type of current sensor data which is most suitable for the updated heterogenous map 318.

Optionally, the mapping device 140 may be further operative to perform localization 320 using the current sensor data, or sensor data derived therefrom. This may be the case if the mapping device 140 performs mapping and localization on behalf of the sensor device 110, e.g., if the sensor device 110 is constrained in terms of computational resources or battery power. More specifically, the mapping device 140 may further be operative, if the selected map element has the same type as the current sensor data, to perform localization 320 using the current sensor data. Else, if the selected map element has a different type than the current sensor data, the mapping device 140 is operative to transform the current sensor data into transformed sensor data having the same type as the selected map element, and to perform localization 320 using the transformed sensor data. Subsequently, if the sensor device 110 and the mapping device 140 are separate devices, the mapping device 140 may transmit information pertaining to the determined location of the sensor device 110 to the sensor device 110 (not shown in Fig. 3).

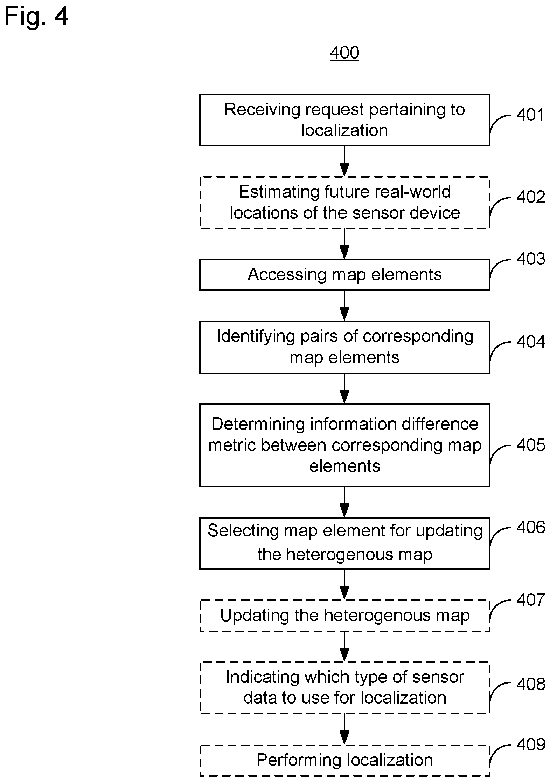

In the following, embodiments of the method 400 of supporting localization and mapping using a heterogenous map comprising image-based map elements and structure-based map elements are described with reference to Fig. 4.

The method 400 is performed by a mapping device and comprises receiving 401 a request pertaining to localization using current sensor data which is image-based sensor data or structure-based sensor data, and accessing 403 image-based map elements and structure-based map elements. The image-based map elements and structure-based map elements represent visual features and structural features, respectively, in a real-world environment. Each map element is associated with a capturing time indicating a time of capturing the sensor data based on which it was derived. The received request may relate to localization of a sensor device comprising at least one sensor operative to capture the current sensor data.

The method 400 further comprises identifying 404 pairs of corresponding map elements, each pair comprising an image-based map element of the accessed image-based elements, and a structure-based map element of the accessed structure-based map elements. The image-based map element and the structure-based map of the pair of corresponding map elements represent features at the same real-world location. The method 400 further comprises, for each pair of corresponding map elements, determining 405 an information difference metric between the image-based map element and the structure-based map element. The information difference metric is indicative of a difference in a representation of the real-world location by the image-based map element and a representation of the real-world location by the structured-based map element. The method 400 further comprises, for each pair of corresponding map elements, selecting 406 one of the map elements of the pair of corresponding map elements for updating the heterogenous map based on a comparison of the respective capturing times, a type of the current sensor data, and the information difference metric.

The method 400 may optionally further comprise, for each pair of corresponding map elements, updating 407 the heterogenous map with the selected map element, or a transformed map element which is derived therefrom.

For instance, the selecting 406 one of the map elements of the pair of corresponding map elements for updating the heterogenous map may comprise determining, if the information difference metric exceeds a threshold, the map element of the pair of corresponding map elements which is derived from the more recently captured sensor data, based on comparing the respective capturing times. The selecting 406 one of the map elements of the pair of corresponding map elements for updating the heterogenous map may further comprise, if the map element which is derived from the more recently captured sensor data is of the same type as the current sensor data, selecting the map element which is derived from the more recently captured sensor data. Else, if the map element which is derived from the more recently captured sensor data is of a different type than the current sensor data, the selecting 406 one of the map elements of the pair of corresponding map elements for updating the heterogenous map may further comprise transforming the map element which is derived from the more recently captured sensor data into a transformed map element having the same type as the current sensor data, and selecting the transformed map element.

As another example, the selecting 406 one of the map elements of the pair of corresponding map elements for updating the heterogenous map may comprise selecting, if the information difference metric does not exceed the threshold, the map element having the same type as the current sensor data.

As a further example, the selecting 406 one of the map elements of the pair of corresponding map elements for updating the heterogenous map may further be based on a prevalent type of neighboring map elements of the heterogenous map at a location where the map is to be updated. More specifically, the selecting 406 one of the map elements of the pair of corresponding map elements for updating the heterogenous map may comprise determining the map element of the pair of corresponding map elements which is derived from the more recently captured sensor data, based on comparing the respective capturing times. The selecting 406 one of the map elements of the pair of corresponding map elements for updating the heterogenous map may further comprise selecting, if the prevalent type of neighboring map elements of the heterogenous map is of the same type as the map element which is derived from the more recently captured sensor data, the map element which is derived from the more recently captured sensor data. Else, if the prevalent type of neighboring map elements of the heterogenous map is of a different type than the map element which is derived from the more recently captured sensor data, the selecting 406 one of the map elements of the pair of corresponding map elements for updating the heterogenous map may further comprise transforming the map element which is derived from the more recently captured sensor data into a transformed map element having the having the same type as the current sensor data, and selecting the transformed map element.

As yet a further example, the selecting 406 one of the map elements of the pair of equivalent map elements for updating the heterogenous map may further be based on relative computational performance of localization algorithms for different types of map elements. More specifically, the selecting 406 one of the map elements of the pair of corresponding map elements for updating the heterogenous map may comprises determining the map element of the pair of corresponding map elements which is derived from the more recently captured sensor data, based on comparing the respective capturing times. The selecting 406 one of the map elements of the pair of corresponding map elements for updating the heterogenous map may further comprise selecting, if the computational performance of a localization algorithm for map elements of the same type as the map element which is derived from the more recently captured sensor data is superior to the computational performance of a localization algorithm for map elements of a different type as the map element which is derived from the more recently captured sensor data, the map element which is derived from the more recently captured sensor data. Else, if the computational performance of a localization algorithm for map elements of the same type as the map element which is derived from the more recently captured sensor data is not superior to the computational performance of a localization algorithm for map elements of a different type as the map element which is derived from the more recently captured sensor data, the selecting 406 one of the map elements of the pair of corresponding map elements for updating the heterogenous map may further comprise transforming the map element which is derived from the more recently captured sensor data into a transformed map element having the having the same type as the current sensor data, and selecting the transformed map element.

The method 400 may optionally further comprise estimating 402 future real-world locations of a sensor device operative to capture the current sensor data, and prioritizing performing one or more of: identifying pairs of corresponding map elements, determining an information difference metric, selecting one of the corresponding map elements, and updating the heterogenous map with the selected map element, for map elements representing the estimated future real-world locations of the sensor device operative to capture the current sensor data. The future real-world locations of a sensor device operative to capture the current sensor data are estimated based on one or more of: a current position of the sensor device, a current and/or future velocity of the sensor device, a planned or estimated route of the sensor device, geographical limitations in the movement of the sensor device, and a processing time which is estimated to lapse between receiving the request pertaining to localization and until updating the heterogenous map is finalized.

If the received request pertains to localization using current sensor data which is image-based sensor data and structure-based sensor data, the method 400 further comprising indicating 408, in response to the request, which type of current sensor data to use for localization.

The method 400 may optionally further comprise, if the selected map element has the same type as the current sensor data, performing localization 408 using the current sensor data. Else, if the selected map element has a different type than the current sensor data, the method may further comprise transforming the current sensor data into transformed sensor data having the same type as the selected map element, and performing localization 409 using the transformed sensor data.

It will be appreciated that the method 400 may comprise additional, alternative, or modified, steps in accordance with what is described throughout this disclosure. An embodiment of the method 400 may be implemented as a computer program comprising instructions which, when the computer program is executed by a computing device, such as the mapping device 140, cause the computing device to carry out the method 400. In particular, the method 400 may be implemented as the computer program 205 comprising instructions which, when executed by the one or more processor(s) 203 comprised in the mapping device 140, cause the mapping device 140 to carry out the method 400 and become operative in accordance with embodiments of the invention described herein.

The computer program 205 may be stored in a computer-readable data carrier, such as the memory 204. Alternatively, the computer program 205 may be carried by a data carrier signal, e.g., downloaded to the memory 204 via the network interface 206.

The person skilled in the art realizes that the invention by no means is limited to the embodiments described above. On the contrary, many modifications and variations are possible within the scope of the appended claims.

## Claims

1. A mapping device (110, 120, 130, 140, 150) for supporting localization of a sensor device (110) in a real-world environment (100) using a heterogenous map comprising image-based map elements, which have been derived from visual images of the real-world environment (100), and structure-based map elements, which have been derived from captured ranges or distances between a sensor and the real-world environment (100), the mapping device operative to:
receive a request (311) pertaining to localization of the sensor device (110) in the real-world environment (100) using current sensor data captured by the sensor device (110), which current sensor data is image-based sensor data or structure-based sensor data,
access (313) image-based map elements and structure-based map elements, representing visual features and structural features in the real-world environment (100), respectively, each map element being associated with a capturing time indicating a time of capturing the sensor data based on which it was derived,
identify (314) pairs of corresponding map elements, each pair comprising an image-based map element of the accessed image-based elements, and a structure-based map element of the accessed structure-based map elements, the image-based map element and the structure-based map element representing features at the same real-world location, and
for each pair of corresponding map elements:
determine (315) an information difference metric between the image-based map element and the structure-based map element, which is indicative of a difference between a representation of the real-world location by the image-based map element and a representation of the real-world location by the structured-based map element, and
select (316) one of the map elements of the pair of corresponding map elements for localizing the sensor device (110) using the current sensor data, based on a comparison of the respective capturing times, a type of the current sensor data, and the information difference metric.

2. The mapping device according to claim 1, further operative to:
estimate (312) future real-world locations of the sensor device (110) based on one or more of:
a current position of the sensor device,
a current and/or future velocity of the sensor device,
a planned or estimated route of the sensor device,
geographical limitations in the movement of the sensor device, and
a processing time which is estimated to lapse between receiving the request pertaining to localization and until updating the heterogenous map is finalized, and
prioritize performing one or more of: identifying (314) pairs of corresponding map elements, determining (315) an information difference metric, and
selecting (316) one of the corresponding map elements, for map elements representing the estimated (312) future real-world locations of the sensor device.

3. The mapping device according to claim 1 or 2, operative to select (316) one of the map elements of the pair of corresponding map elements for localizing the sensor device (110), if the information difference metric exceeds a threshold, by:
determining the map element of the pair of corresponding map elements which is derived from the more recently captured sensor data, based on comparing the respective capturing times, and
if the map element which is derived from the more recently captured sensor data is of the same type as the current sensor data:
selecting the map element which is derived from the more recently captured sensor data,
else:
transforming the map element which is derived from the more recently captured sensor data into a transformed map element having the same type as the current sensor data, and
selecting the transformed map element.

4. The mapping device according to any one of claims 1 to 3, operative to select (316) one of the map elements of the pair of corresponding map elements for localizing the sensor device (110), if the information difference metric does not exceed the threshold, by selecting the map element having the same type as the current sensor data.

5. The mapping device according to any one of claims 1 to 4, operative to select (316) one of the map elements of the pair of corresponding map elements for localizing the sensor device (110) further based on a prevalent type of neighboring map elements of the heterogenous map at a location of the pair of corresponding map elements.

6. The mapping device according to claim 5, operative to select (316) one of the map elements of the pair of corresponding map elements for localizing the sensor device (110) by:
determining the map element of the pair of corresponding map elements which is derived from the more recently captured sensor data, based on comparing the respective capturing times, and
if the prevalent type of neighboring map elements of the heterogenous map is of the same type as the map element which is derived from the more recently captured sensor data:
selecting the map element which is derived from the more recently captured sensor data,
else:
transforming the map element which is derived from the more recently captured sensor data into a transformed map element having the same type as the current sensor data, and
selecting the transformed map element.

7. The mapping device according to any one of claims 1 to 6, operative to select (316) one of the map elements of the pair of corresponding map elements for localizing the sensor device (110) further based on relative computational performance of localization algorithms for different types of map elements.

8. The mapping device according to claim 7, operative to select (316) one of the map elements of the pair of corresponding map elements for localizing the sensor device (110) by:
determining the map element of the pair of corresponding map elements which is derived from the more recently captured sensor data, based on comparing the respective capturing times, and
if the computational performance of a localization algorithm for map elements of the same type as the map element which is derived from the more recently captured sensor data is superior to the computational performance of a localization algorithm for map elements of a different type than the map element which is derived from the more recently captured sensor data:
selecting the map element which is derived from the more recently captured sensor data,
else:
transforming the map element which is derived from the more recently captured sensor data into a transformed map element having the same type as the current sensor data, and
selecting the transformed map element.

9. The mapping device according to anyone of claims 1 to 8, further operative to:
if the selected (316) map element has the same type as the current sensor data:
perform localization (320) using the current sensor data,
else:
transform the current sensor data into transformed sensor data having the same type as the selected map element, and
perform localization (320) using the transformed sensor data.

10. The mapping device according to any one of claims 1 to 9, wherein the received request (311) pertains to localization using current sensor data which is image-based sensor data and structure-based sensor data, the mapping device further operative to indicate (319), in response to the request, which type of current sensor data to use for localization.

11. The mapping device (150) according to any one of claims 1 to 10, comprising the sensor device (110).

12. The mapping device according to any one of claims 1 to 11, being any one of: a mobile phone, a smartphone, an eXtended-Reality headset, a robot, a vehicle, a drone, an Unmanned Autonomous Vehicle, an application server, and an edgecloud server.

13. A method (400) of supporting localization of a sensor device (110) in a real-world environment (100) using a heterogenous map comprising image-based map elements, which have been derived from visual images of the real-world environment (100), and structure-based map elements, which have been derived from captured ranges or distances between a sensor and the real-world environment (100), the method performed by a mapping device and comprising:
receiving (401) a request pertaining to localization of the sensor device (110) in the real-world environment (100) using current sensor data captured by the sensor device (110), which current sensor data is image-based sensor data or structure-based sensor data,
accessing (403) image-based map elements and structure-based map elements, representing visual features and structural features in the real-world environment (100), respectively, each map element being associated with a capturing time indicating a time of capturing the sensor data based on which it was derived,
identifying (404) pairs of corresponding map elements, each pair comprising an image-based map element of the accessed image-based elements, and a structure-based map element of the accessed structure-based map elements, the image-based map element and the structure-based map element representing features at the same real-world location, and
for each pair of corresponding map elements:
determining (405) an information difference metric between the image-based map element and the structure-based map element, which is indicative of a difference between a representation of the real-world location by the image-based map element and a representation of the real-world location by the structured-based map element, and
selecting (406) one of the map elements of the pair of corresponding map elements for localizing the sensor device (110) using the current sensor data, based on a comparison of the respective capturing times, a type of the current sensor data, and the information difference metric.

14. A computer program (205) comprising instructions which, when the computer program is executed by a computing device (110, 120, 130, 140, 150), cause the computing device to carry out the method of claim 13.

15. A computer-readable data carrier (204) having stored thereon the computer program (205) of claim 14.

16. A data carrier signal carrying the computer program (205) of claim 14.

## Patentansprüche

1. Kartierungsvorrichtung (110, 120, 130, 140, 150) zum Unterstützen der Lokalisierung einer Sensorvorrichtung (110) in einer realen Umgebung (100) unter Verwendung einer heterogenen Karte, die bildbasierte Kartenelemente, die von visuellen Bildern der realen Umgebung (100) abgeleitet wurden, und strukturbasierte Kartenelemente umfasst, die von erfassten Entfernungen oder Abständen zwischen einem Sensor und der realen Umgebung (100) abgeleitet wurden, wobei die Kartierungsvorrichtung zu Folgendem ausgelegt ist:
Empfangen einer Anforderung (311) bezüglich der Lokalisierung der Sensorvorrichtung (110) in der realen Umgebung (100) unter Verwendung aktueller Sensordaten, die von der Sensorvorrichtung (110) erfasst werden, wobei die aktuellen Sensordaten bildbasierte Sensordaten oder strukturbasierte Sensordaten sind,
Abrufen (313) bildbasierter Kartenelemente und strukturbasierter Kartenelemente, die visuelle Merkmale bzw. strukturelle Merkmale in der realen Umgebung (100) darstellen, wobei jedes Kartenelement mit einer Erfassungszeit assoziiert ist, die eine Zeit der Erfassung der Sensordaten angibt, auf deren Basis es abgeleitet wurde,
Identifizieren (314) von Paaren von entsprechenden Kartenelementen, wobei jedes Paar ein bildbasiertes Kartenelement der abgerufenen bildbasierten Kartenelemente und ein strukturbasiertes Kartenelement der abgerufenen strukturbasierten Kartenelemente umfasst, wobei das bildbasierte Kartenelement und das strukturbasierte Kartenelement Merkmale am gleichen realen Ort darstellen, und
für jedes Paar von entsprechenden Kartenelementen:
Bestimmen (315) einer Informationsdifferenzmetrik zwischen dem bildbasierten Kartenelement und dem strukturbasierten Kartenelement, die eine Differenz zwischen einer Darstellung des realen Orts durch das bildbasierte Kartenelement und einer Darstellung des realen Orts durch das strukturbasierte Kartenelement angibt, und
Auswählen (316) eines der Kartenelemente des Paars von entsprechenden Kartenelementen zum Lokalisieren der Sensorvorrichtung (110) unter Verwendung der aktuellen Sensordaten basierend auf einem Vergleich der jeweiligen Erfassungszeiten, einem Typ der aktuellen Sensordaten und der Informationsdifferenzmetrik.

2. Kartierungsvorrichtung nach Anspruch 1, die ferner zu Folgendem ausgelegt ist:
Schätzen (312) zukünftiger realer Orte der Sensorvorrichtung (110) basierend auf einem oder mehreren von Folgenden:
einer aktuellen Position der Sensorvorrichtung,
einer aktuellen und/oder zukünftigen Geschwindigkeit der Sensorvorrichtung,
einer geplanten oder geschätzten Route der Sensorvorrichtung,
geografischen Einschränkungen in der Bewegung der Sensorvorrichtung und
einer Verarbeitungszeit, deren Verstreichen zwischen dem Empfang der Anforderung bezüglich der Lokalisierung bis zur Beendigung der Aktualisierung der heterogenen Karte geschätzt wird, und
Priorisieren des Durchführens von einem oder mehrerem von Folgendem: Identifizieren (314) von Paaren von entsprechenden Kartenelementen, Bestimmen (315) einer Informationsdifferenzmetrik und Auswählen (316) eines der entsprechenden Kartenelemente für Kartenelemente, die die geschätzten (312) zukünftigen realen Orte der Sensorvorrichtung darstellen.

3. Kartierungsvorrichtung nach Anspruch 1 oder 2, die dazu ausgelegt ist, eines der Kartenelemente des Paars von entsprechenden Kartenelementen zum Lokalisieren der Sensorvorrichtung (110), falls die Informationsdifferenzmetrik einen Schwellenwert überschreitet, durch Folgendes auszuwählen (316):
Bestimmen des Kartenelements des Paars von entsprechenden Kartenelementen, das von den kürzlicher erfassten Sensordaten abgeleitet wird, basierend auf einem Vergleich der jeweiligen Erfassungszeiten und,
falls das von den kürzlicher erfassten Sensordaten abgeleitete Kartenelement vom gleichen Typ wie die aktuellen Sensordaten ist;
Auswählen des von den kürzlicher erfassten Sensordaten abgeleiteten Kartenelements,
sonst:
Umwandeln des von den kürzlicher erfassten Sensordaten abgeleiteten Kartenelements in ein umgewandeltes Kartenelement, das den gleichen Typ wie die aktuellen Sensordaten aufweist, und
Auswählen des umgewandelten Kartenelements.

4. Kartierungsvorrichtung nach einem der Ansprüche 1 bis 3, die dazu ausgelegt ist, eines der Kartenelemente des Paars von entsprechenden Kartenelementen zum Lokalisieren der Sensorvorrichtung (110) durch Auswählen des Kartenelements mit dem gleichen Typ wie die aktuellen Sensordaten auszuwählen (316), falls die Informationsdifferenzmetrik den Schwellenwert nicht überschreitet.

5. Kartierungsvorrichtung nach einem der Ansprüche 1 bis 4, die dazu ausgelegt ist, eines der Kartenelemente des Paars von entsprechenden Kartenelementen zum Lokalisieren der Sensorvorrichtung (110) ferner basierend auf einem vorherrschenden Typ von benachbarten Kartenelementen der heterogenen Karte an dem Ort des Paars von entsprechenden Kartenelementen auszuwählen (316).

6. Kartierungsvorrichtung nach Anspruch 5, die dazu ausgelegt ist, eines der Kartenelemente des Paars von entsprechenden Kartenelementen zum Lokalisieren der Sensorvorrichtung (110) durch Folgendes auszuwählen (316):
Bestimmen des Kartenelements des Paars von entsprechenden Kartenelementen, das von den kürzlicher erfassten Sensordaten abgeleitet wird, basierend auf einem Vergleich der jeweiligen Erfassungszeiten und,
falls der vorherrschende Typ von benachbarten Kartenelementen der heterogenen Karte vom gleichen Typ wie das von den kürzlicher erfassten Sensordaten abgeleitete Kartenelement ist:
Auswählen des von den kürzlicher erfassten Sensordaten abgeleiteten Kartenelements,
sonst:
Umwandeln des von den kürzlicher erfassten Sensordaten abgeleiteten Kartenelements in ein umgewandeltes Kartenelement, das den gleichen Typ wie die aktuellen Sensordaten aufweist, und
Auswählen des umgewandelten Kartenelements.

7. Kartierungsvorrichtung nach einem der Ansprüche 1 bis 6, die dazu ausgelegt ist, eines der Kartenelemente des Paars von entsprechenden Kartenelementen zum Lokalisieren der Sensorvorrichtung (110) ferner basierend auf einer relativen Rechenleistung von Lokalisierungsalgorithmen für verschiedene Typen von Kartenelementen auszuwählen (316).

8. Kartierungsvorrichtung nach Anspruch 7, die dazu ausgelegt ist, eines der Kartenelemente des Paars von entsprechenden Kartenelementen zum Lokalisieren der Sensorvorrichtung (110) durch Folgendes auszuwählen (316):
Bestimmen des Kartenelements des Paars von entsprechenden Kartenelementen, das von den kürzlicher erfassten Sensordaten abgeleitet wird, basierend auf einem Vergleich der jeweiligen Erfassungszeiten und,
falls die Rechenleistung eines Lokalisierungsalgorithmus für Kartenelemente vom gleichen Typ wie das aus den kürzlicher erfassten Sensordaten abgeleitete Kartenelement besser als die Rechenleistung eines Lokalisierungsalgorithmus für Kartenelemente eines anderen Typs als das von den kürzlicher erfassten Sensordaten abgeleitete Kartenelement ist:
Auswählen des von den kürzlicher erfassten Sensordaten abgeleiteten Kartenelements,
sonst:
Umwandeln des von den kürzlicher erfassten Sensordaten abgeleiteten Kartenelements in ein umgewandeltes Kartenelement, das den gleichen Typ wie die aktuellen Sensordaten aufweist, und
Auswählen des umgewandelten Kartenelements.

9. Kartierungsvorrichtung nach Anspruch 1 bis 8, die ferner zu Folgendem ausgelegt ist:
falls das ausgewählte (316) Kartenelemente den gleichen Typ wie die aktuellen Sensordaten aufweist:
Durchführen von Lokalisierung (320) unter Verwendung der aktuellen Sensoren Daten,
sonst:
Umwandeln der aktuellen Sensordaten in umgewandelte Sensordaten mit dem gleichen Typ wie das ausgewählte Kartenelement, und
Durchführen von Lokalisierung (320) unter Verwendung der umgewandelten Sensordaten.

10. Kartierungsvorrichtung nach einem der Ansprüche 1 bis 9, wobei die empfangene Anforderung (311) die Lokalisierung unter Verwendung von aktuellen Sensordaten betrifft, die bildbasierte Sensordaten und strukturbasierte Daten sind, wobei die Kartierungsvorrichtung ferner dazu ausgelegt ist in Reaktion auf die Anforderung anzugeben (319), welcher Typ von aktuellen Sensordaten zur Lokalisierung verwendet werden soll.

11. Kartierungsvorrichtung (150) nach einem der Ansprüche 1 bis 10, umfassend die Sensorvorrichtung (110).

12. Kartierungsvorrichtung nach einem der Ansprüche 1 bis 11, wobei es sich um eines von Folgenden handelt: ein Mobiltelefon, ein Smartphone, ein extended-Reality-Headset, einen Roboter, ein Fahrzeug, eine Drohne, ein unbemanntes autonomes Fahrzeug, einen Anwendungsserver und einen Edge-Cloud-Server.

13. Verfahren (400) zur Unterstützung der Lokalisierung einer Sensorvorrichtung (110) in einer realen Umgebung (100) unter Verwendung einer heterogenen Karte, die bildbasierte Kartenelemente, die von visuellen Bildern der realen Umgebung (100) abgeleitet wurden, und strukturbasierten Kartenelemente umfasst, die von erfassten Entfernungen oder Abständen zwischen einem Sensor und der realen Umgebung (100) abgeleitet wurden, wobei das Verfahren von einer Kartierungsvorrichtung durchgeführt wird und Folgendes umfasst:
Empfangen (401) einer Anforderung bezüglich der Lokalisierung der Sensorvorrichtung (110) in der realen Umgebung (100) unter Verwendung aktueller Sensordaten, die von der Sensorvorrichtung (110) erfasst werden, wobei die aktuellen Sensordaten bildbasierte Sensordaten oder strukturbasierte Sensordaten sind,
Abrufen (403) bildbasierter Kartenelemente und strukturbasierter Kartenelemente, die visuelle Merkmale bzw. strukturelle Merkmale in der realen Umgebung (100) darstellen, wobei jedes Kartenelement mit einer Erfassungszeit assoziiert ist, die eine Zeit der Erfassung der Sensordaten angibt, auf deren Basis es abgeleitet wurde,
Identifizieren (404) von Paaren von entsprechenden Kartenelementen, wobei jedes Paar ein bildbasiertes Kartenelement der abgerufenen bildbasierten Kartenelemente und ein strukturbasiertes Kartenelement der abgerufenen strukturbasierten Kartenelemente umfasst, wobei das bildbasierte Kartenelement und das strukturbasierte Kartenelement Merkmale am gleichen realen Ort darstellen, und
für jedes Paar von entsprechenden Kartenelementen:
Bestimmen (405) einer Informationsdifferenzmetrik zwischen dem bildbasierten Kartenelement und dem strukturbasierten Kartenelement, die eine Differenz zwischen einer Darstellung des realen Orts durch das bildbasierte Kartenelement und einer Darstellung des realen Orts durch das strukturbasierte Kartenelement angibt, und
Auswählen (406) eines der Kartenelemente des Paars von entsprechenden Kartenelementen zum Lokalisieren der Sensorvorrichtung (110) unter Verwendung der aktuellen Sensordaten basierend auf einem Vergleich der jeweiligen Erfassungszeiten, einem Typ der aktuellen Sensordaten und der Informationsdifferenzmetrik.

14. Computerprogramm (205), umfassend Anweisungen, die bei Ausführung des Computerprogramms durch eine Computervorrichtung (110, 120, 130, 140, 150) die Computervorrichtung zum Durchführen des Verfahrens nach Anspruch 13 veranlassen.

15. Computerlesbarer Datenträger (204), der das Computerprogramm (205) nach Anspruch 14 darauf gespeichert aufweist.

16. Datenträgersignal, das das Computerprogramm (205) nach Anspruch 14 trägt.

## Revendications

1. Dispositif de cartographie (110, 120, 130, 140, 150) pour prendre en charge une localisation d'un dispositif capteur (110) dans un environnement du monde réel (100) à l'aide d'une carte hétérogène comprenant des éléments de carte basés sur images, qui ont été dérivés d'images visuelles de l'environnement du monde réel (100), et des éléments de carte basés sur structure, qui ont été dérivés de portées ou de distances capturées entre un capteur et l'environnement du monde réel (100), le dispositif de cartographie étant fonctionnel pour :
recevoir une demande (311) concernant une localisation du dispositif capteur (110) dans l'environnement du monde réel (100) à l'aide de données de capteur actuelles capturées par le dispositif capteur (110), les données de capteur actuelles étant des données de capteur basées sur images ou des données de capteur basées sur structure,
accéder (313) aux éléments de carte basés sur images et aux éléments de carte basés sur structure, représentant respectivement des caractéristiques visuelles et des caractéristiques structurelles dans l'environnement du monde réel (100), chaque élément de carte étant associé à un temps de capture indiquant un temps de capture des données de capteur desquelles il a été dérivé,
identifier (314) des paires d'éléments de carte correspondants, chaque paire comprenant un élément de carte basé sur images parmi les éléments de carte basés sur images accédés, et un élément de carte basé sur structure parmi les éléments de carte basés sur structure accédés, l'élément de carte basé sur images et l'élément de carte basé sur structure représentant des caractéristiques au même emplacement du monde réel, et
pour chaque paire d'éléments de carte correspondants :
déterminer (315) une métrique de différence d'informations entre l'élément de carte basé sur images et l'élément de carte basé sur structure, qui indique une différence entre une représentation de l'emplacement du monde réel par l'élément de carte basé sur images et une représentation de l'emplacement du monde réel par l'élément de carte basé sur structure, et
sélectionner (316) l'un des éléments de carte de la paire d'éléments de carte correspondants pour localiser le dispositif capteur (110) à l'aide des données de capteur actuelles, sur la base d'une comparaison des temps de capture respectifs, d'un type des données de capteur actuelles et de la métrique de différence d'informations.

2. Dispositif de cartographie selon la revendication 1, fonctionnel en outre pour :
estimer (312) des emplacements futurs du monde réel du dispositif capteur (110) sur la base d'un ou plusieurs parmi :
une position actuelle du dispositif capteur,
une vitesse actuelle et/ou future du dispositif capteur,
un itinéraire planifié ou estimé du dispositif capteur,
des limites géographiques du déplacement du dispositif capteur, et
un temps de traitement qui est estimé s'écouler entre la réception de la demande concernant une localisation et la finalisation de la mise à jour de la carte hétérogène, et
prioriser la réalisation d'une ou plusieurs parmi : l'identification (314) de paires d'éléments de carte correspondants, la détermination (315) d'une métrique de différence d'informations, et la sélection (316) de l'un des éléments de carte correspondants, pour des éléments de carte représentant les emplacements futurs du monde réel estimés (312) du dispositif capteur.

3. Dispositif de cartographie selon la revendication 1 ou 2, fonctionnel pour sélectionner (316) l'un des éléments de carte de la paire d'éléments de carte correspondants pour localiser le dispositif capteur (110), si la métrique de différence d'informations dépasse un seuil, par :
la détermination de l'élément de carte de la paire d'éléments de carte correspondants qui est dérivé des données de capteur capturées plus récemment, sur la base de la comparaison des temps de capture respectifs, et
si l'élément de carte qui est dérivé des données de capteur capturées plus récemment est du même type que les données de capteur actuelles :
la sélection de l'élément de carte qui est dérivé des données de capteur capturées plus récemment,
sinon :
la transformation de l'élément de carte qui est dérivé des données de capteur capturées plus récemment en un élément de carte transformé présentant le même type que les données de capteur actuelles, et
la sélection de l'élément de carte transformé.

4. Dispositif de cartographie selon l'une quelconque des revendications 1 à 3, fonctionnel pour sélectionner (316) l'un des éléments de carte de la paire d'éléments de carte correspondants pour localiser le dispositif capteur (110), si la métrique de différence d'informations ne dépasse pas le seuil, par la sélection de l'élément de carte présentant le même type que les données de capteur actuelles.

5. Dispositif de cartographie selon l'une quelconque des revendications 1 à 4, fonctionnel pour sélectionner (316) l'un des éléments de carte de la paire d'éléments de carte correspondants pour localiser le dispositif capteur (110) en outre sur la base d'un type prévalant d'éléments de carte voisins de la carte hétérogène à un emplacement de la paire d'éléments de carte correspondants.

6. Dispositif de cartographie selon la revendication 5, fonctionnel pour sélectionner (316) l'un des éléments de carte de la paire d'éléments de carte correspondants pour localiser le dispositif capteur (110) par :
la détermination de l'élément de carte de la paire d'éléments de carte correspondants qui est dérivé des données de capteur capturées plus récemment, sur la base de la comparaison des temps de capture respectifs, et
si le type prévalant d'éléments de carte voisins de la carte hétérogène est du même type que l'élément de carte qui est dérivé des données de capteur capturées plus récemment :
la sélection de l'élément de carte qui est dérivé des données de capteur capturées plus récemment,
sinon :
la transformation de l'élément de carte qui est dérivé des données de capteur capturées plus récemment en un élément de carte transformé présentant le même type que les données de capteur actuelles, et
la sélection de l'élément de carte transformé.

7. Dispositif de cartographie selon l'une quelconque des revendications 1 à 6, fonctionnel pour sélectionner (316) l'un des éléments de carte de la paire d'éléments de carte correspondants pour localiser le dispositif capteur (110) en outre sur la base d'une performance de calcul relative d'algorithmes de localisation pour différents types d'éléments de carte.

8. Dispositif de cartographie selon la revendication 7, fonctionnel pour sélectionner (316) l'un des éléments de carte de la paire d'éléments de carte correspondants pour localiser le dispositif capteur (110) par :
la détermination de l'élément de carte de la paire d'éléments de carte correspondants qui est dérivé des données de capteur capturées plus récemment, sur la base de la comparaison des temps de capture respectifs, et
si la performance de calcul d'un algorithme de localisation pour des éléments de carte du même type que l'élément de carte qui est dérivé des données de capteur capturées plus récemment est supérieure à la performance de calcul d'un algorithme de localisation pour des éléments de carte d'un type différent de l'élément de carte qui est dérivé des données de capteur capturées plus récemment :
la sélection de l'élément de carte qui est dérivé des données de capteur capturées plus récemment,
sinon :
la transformation de l'élément de carte qui est dérivé des données de capteur capturées plus récemment en un élément de carte transformé présentant le même type que les données de capteur actuelles, et
la sélection de l'élément de carte transformé.

9. Dispositif de cartographie selon l'une quelconque des revendications 1 à 8, fonctionnel en outre pour :
si l'élément de carte (316) sélectionné présente le même type que les données de capteur actuelles :
réaliser une localisation (320) à l'aide des données de capteur actuelles,
sinon :
transformer les données de capteur actuelles en données de capteur transformées présentant le même type que l'élément de carte sélectionné ; et
réaliser une localisation (320) à l'aide des données de capteur transformées.

10. Dispositif de cartographie selon l'une quelconque des revendications 1 à 9, dans lequel la demande reçue (311) concerne une localisation à l'aide de données de capteur actuelles qui sont des données de capteur basées sur images et des données de capteur basées sur structure, le dispositif de cartographie étant en outre fonctionnel pour indiquer (319), en réponse à la demande, le type de données de capteur actuelles qu'il faut utiliser pour une localisation.

11. Dispositif de cartographie (150) selon l'une quelconque des revendications 1 à 10, comprenant le dispositif capteur (110).

12. Dispositif de cartographie selon l'une quelconque des revendications 1 à 11, étant l'un quelconque parmi : un téléphone mobile, un smartphone, un casque de réalité étendue, un robot, un véhicule, un drone, un véhicule autonome sans pilote, un serveur d'applications et un serveur edgecloud.

13. Procédé (400) de prise en charge d'une localisation d'un dispositif capteur (110) dans un environnement du monde réel (100) à l'aide d'une carte hétérogène comprenant des éléments de carte basés sur images, qui ont été dérivés d'images visuelles de l'environnement du monde réel (100), et des éléments de carte basés sur structure, qui ont été dérivés de portées ou de distances capturées entre un capteur et l'environnement du monde réel (100), le procédé étant réalisé par un dispositif de cartographie et comprenant :
la réception (401) d'une demande concernant une localisation du dispositif capteur (110) dans l'environnement du monde réel (100) à l'aide de données de capteur actuelles capturées par le dispositif capteur (110), les données de capteur actuelles étant des données de capteur basées sur images ou des données de capteur basées sur structure,
l'accès (403) à des éléments de carte basés sur images et à des éléments de carte basés sur structure, représentant respectivement des caractéristiques visuelles et des caractéristiques structurelles dans l'environnement du monde réel (100), chaque élément de carte étant associé à un temps de capture indiquant un temps de capture des données de capteur desquelles il a été dérivé,
l'identification (404) de paires d'éléments de carte correspondants, chaque paire comprenant un élément de carte basé sur images parmi les éléments de carte basés sur images accédés, et un élément de carte basé sur structure parmi les éléments de carte basés sur structure accédés, l'élément de carte basé sur images et l'élément de carte basé sur structure représentant des caractéristiques au même emplacement du monde réel, et
pour chaque paire d'éléments de carte correspondants :
la détermination (405) d'une métrique de différence d'informations entre l'élément de carte basé sur images et l'élément de carte basé sur structure, qui indique une différence entre une représentation de l'emplacement du monde réel par l'élément de carte basé sur images et une représentation de l'emplacement du monde réel par l'élément de carte basé sur structure, et
la sélection (406) de l'un des éléments de carte de la paire d'éléments de carte correspondants pour localiser le dispositif capteur (110) à l'aide des données de capteur actuelles, sur la base d'une comparaison des temps de capture respectifs, d'un type des données de capteur actuelles et de la métrique de différence d'informations.

14. Programme informatique (205) comprenant des instructions qui, lorsque le programme informatique est exécuté par un dispositif informatique (110, 120, 130, 140, 150), amènent le dispositif informatique à réaliser le procédé selon la revendication 13.

15. Support de données lisible par ordinateur (204) sur lequel est stocké le programme informatique (205) selon la revendication 14.

16. Signal porteur de données portant le programme informatique (205) selon la revendication 14.
